# EUROPEAN PATENT SPECIFICATION

(11) **EP 4 350 859 B1**
(45) Date of publication and mention of the grant of the patent: **02.12.2026**
(21) Application number: 23740552.7
(22) Date of filing: 17.01.2023
(51) Int. Cl.: H01M 50/24, H01M 50/264, H01M 50/209, H01M 50/204, H01M 10/04

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 17.01.2022 KR 20220006426; 16.01.2023 KR 20230006365
(43) Date of publication of application: 10.04.2024
(73) Proprietor: LG Energy Solution, Ltd., Seoul 07335 (KR)
(72) Inventor: LEE, Jung Hoon, Daejeon 34122 (KR); KIM, Dooseung, Daejeon 34122 (KR); YANG, Jaehun, Daejeon 34122 (KR)
(74) Representative: Goddar, Heinz J.
(86) International application number: PCT/KR2023/000811
(87) International publication number: WO 2023/136709

(56) References cited:
- EP-A1- 3 907 809
- CN-U- 212 392 320
- KR-A- 20140 032 165
- KR-A- 20140 089 067
- KR-A- 20140 089 067
- KR-A- 20180 125 795
- KR-A- 20210 090 965
- KR-B1- 102 205 310
- KR-B1- 102 205 310

## Description

### [TECHNICAL FIELD]

### Cross Citation with Related Application(s)

This application claims the benefit of Korean Patent Application No. 10-2022-0006426 filed on January 17, 2022 and Korean Patent Application No. 10-2023-0006365 filed on January 16, 2023 in the Korean Intellectual Property Office.

The present disclosure relates to a battery pack and a device including the same, and more particularly, to a battery pack having high pressure structure with respect to battery cells and a device including the same.

### [BACKGROUND]

In modem society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

In the case of a secondary battery used for small-sized devices, two to three battery cells are arranged, but in the case of a secondary battery used for a medium- and large-sized device such as automobiles, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BDU(battery disconnect unit), a BMS (battery management system) and a cooling system to form a battery pack.

Meanwhile, the secondary battery may cause a phenomenon in which the internal electrolyte decomposes to generate gas and the battery cell swells in the process of repeated charging and discharging or in the initial charging process, that is, a swelling or breathing phenomenon. In particular, in the case of the pouch-type secondary battery, the structural stiffness of the exterior material is weaker than that of the can-type secondary battery, and thus, the swelling phenomenon may occur more severely.

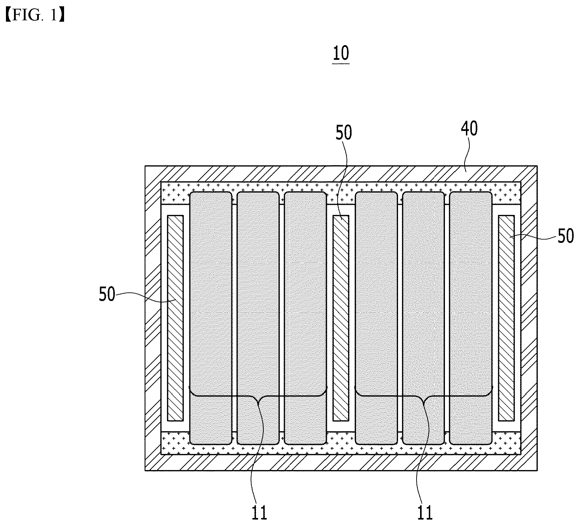

FIG. 1 is a cross-sectional view which schematically shows a cross section of a conventional battery module 10.

Referring to FIG. 1, the conventional battery module 10 may include a plurality of battery cells 11 stacked along one direction and a module frame 40 that houses the battery cells 11. Such a battery cell 11 may be a pouch-type battery cell. If swelling occurs in the battery cells 11, it mainly swells in the stacking direction. In the conventional battery module 10, a compression pad 50 is arranged between the battery cells 11 or between the battery cells 11 and one surface of the module frame 40 to control the swelling of the battery cells 11.

As the capacity of the battery cell increases, the degree of swelling also increases greatly, and the number of battery cells applied to the battery module tends to increase gradually. Therefore, controlling the swelling of battery cells inside battery modules has become an important issue.

When a swelling phenomenon occurs in the battery cells, the pressure inside the battery increases and the volume increases, which may adversely affect the structural stability of the battery module. Moreover, in the case of the battery module 10, it includes a large number of battery cells that are mutually connected for high output or high capacity. At this time, even if the volume increases only slightly due to swelling of each battery cell, the volume change of each battery cell is summed up in the entire battery module, and the degree of deformation may reach a serious level. In particular, deformation may occur in the module frame 40 that houses a plurality of battery cells or breakage may occur to a welded portion of the module frame 40.

Even if the compression pad 50 is interposed as in the conventional one, there may be a limit to controlling the swelling of the battery cell 11. In particular, solid-state batteries can be applied as pouch battery cells to realize high-capacity battery modules and battery packs, but in the case of solid-state batteries, the degree of swelling is greater, and a certain level of pressing force must be applied in order to exhibit battery performance. The conventional battery module 10 has a structure that makes it difficult to apply a high pressing force to the battery cell.

Therefore, there is a need to develop a new battery pack structure capable of effectively controlling swelling of the battery cells and applying a high level of pressing force to the battery cell.

The document KR 2014 0089067 A discloses an air-cooled battery pack having a structure in which, by attaching a sealing member between battery modules, the flow of cooling air is guided into the interior of the battery module.

The document KR 102 205 310 B1 discloses a battery pack including a swelling damping portion to alleviate localized stress on the outermost battery module.

### [DETAILED DESCRIPTION OF THE INVENTION]

### [Technical Problem]

It is an object of the present disclosure to provide to a battery pack having a structure capable of effectively controlling swelling of the battery cells and applying a high level of pressing force to the battery cell, and a device including the same

However, the problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack comprising: a battery module including a plurality of battery cells; a pack case that houses the battery module; and a pair of pressure members that are arranged in the pack case, wherein the battery module is located between the pair of pressure members, and wherein the battery module is forcibly inserted between the pair of pressure members, and configured such that a pressing force is applied to the battery module by the pair of pressure members.

The pressure member may be an elastic body that applies a pressing force toward the battery module.

The pressure member may have a leaf spring structure that protrudes in a direction in which the battery module is located.

An interval between the pair of pressure members is narrower than a width of the battery module, and the battery module can be forcibly inserted between the pair of pressure members.

The battery cells are stacked along one direction within the battery module, and the pair of pressure members are respectively located on both surfaces of the battery module in a direction in which the battery cells are stacked.

One direction in which the battery cells are stacked may be parallel to one surface of the bottom part of the pack case.

One direction in which the battery cells are stacked may be perpendicular to one surface of the bottom part of the pack case.

The battery module may include support frames facing the pair of pressure members.

The support frame may have a recessed shape such that it corresponds to the protruding shape of the pressure member.

One surface of the support frame facing the pressure member may have a recessed shape, and the other surface facing the battery cells may have a flat shape.

At least one bearing ball may be inserted into the support frame, and the at least one bearing ball may rotate within the support frame.

A part of the at least one bearing ball may be exposed and protruded from one surface of the support frame in a direction where the pressure member is located, and the at least one bearing ball can make contact with the pressure member.

The battery module may be forcibly inserted and coupled between the pair of pressure members according the rotation of the at least one bearing ball.

The battery module may include a module frame that houses the battery cells, and the support frames may constitute both side surfaces of the module frame.

The battery module may include a module frame that houses the battery cells, and the support frames may be configured so as to be attached to both side surfaces of the module frame, respectively.

The battery pack may further comprise at least two vertical beams arranged in the pack case, and the pair of pressure members and the battery module may be located between a pair of vertical beams adjacent to each other among the at least two vertical beams.

At least one bearing ball may be inserted into the pressure member. At least one bearing ball may rotate within the pressure member. A part of the at least one bearing ball is exposed and protruded toward the battery module, and the at least one bearing ball may make contact with the battery module.

The battery cell may be a solid-state battery.

According to another embodiment of the present disclosure, there is provided a device comprising the battery pack.

### [Advantageous Effects]

According to embodiments of the present disclosure, the battery module is forcibly inserted between a pair of pressure members, so that the swelling of the battery cells included in the battery module can be effectively controlled, and a high level of pressing force can be applied to the battery cells.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a cross-sectional view which schematically shows a cross section of a conventional battery module;
FIG. 2 is a perspective view showing a battery pack according to one embodiment of the present disclosure;
FIG. 3 is a perspective view showing a battery module included in the battery pack of FIG. 2;
FIG. 4 is a perspective view showing a battery cell stack according to one embodiment of the present disclosure;
FIG. 5 is a perspective view showing one of the battery cells included in the battery cell stack of FIG. 4;
FIG. 6 is a perspective view showing a support frame according to one embodiment of the present disclosure;
FIG. 7 is a plan view of the support frame of FIG. 6 as viewed from above;
FIG. 8 is a partial view showing a first frame and a bearing ball according to one embodiment of the present disclosure;
FIG. 9 is a partial view showing a second frame according to one embodiment of the present disclosure;
FIGS. 10 and 11 are a perspective view and a side view of a pressure member according to one embodiment of the present disclosure, respectively;
FIG. 12 is a plan view showing a state in which a battery cell stack, a support frame, and a pressure member are arranged according to one embodiment of the present disclosure;
FIG. 13 is an exploded perspective view showing a battery module according to another embodiment of the present disclosure;
FIG. 14 is a perspective view showing a battery pack according to another embodiment of the present disclosure in which the stacking direction of battery cells is changed;
FIG. 15 is a perspective view showing a battery pack according to a modified embodiment of the present disclosure; and
FIG. 16 is a plan view of a pressure member included in the battery pack of FIG. 15 as viewed from above.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

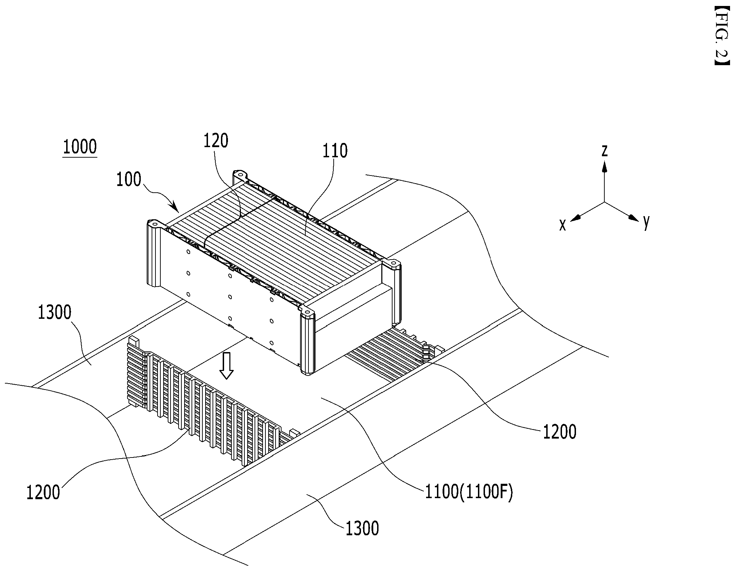

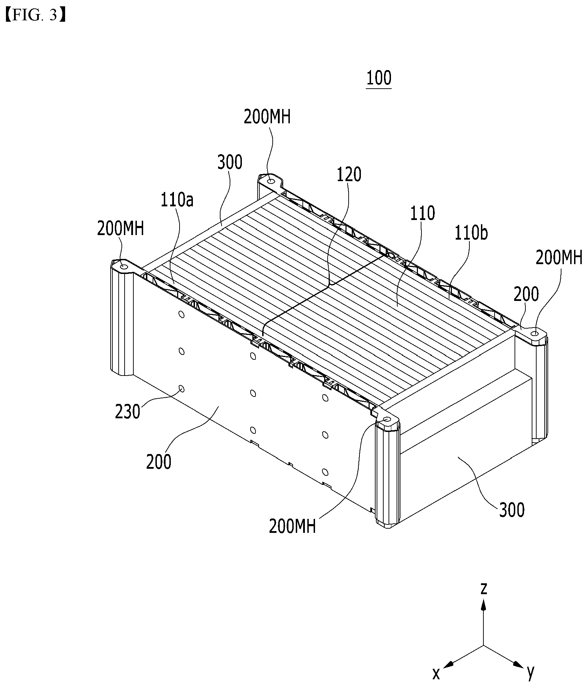

FIG. 2 is a perspective view showing a battery pack according to one embodiment of the present disclosure. FIG. 3 is a perspective view showing a battery module included in the battery pack of FIG. 2.

Referring to FIGS. 2 and 3, the battery pack 1000 according to one embodiment of the present disclosure includes a battery module 100 including a plurality of battery cells 110, a pack case 1100 that houses the battery module 100, and a pair of pressure members 1200 that is arranged in the pack case 1100. The battery module 100 is located between the pair of pressure members 1200.

The battery module 100 is forcibly inserted between the pair of pressure members 1200, and configured such that a pressing force is applied to the battery module 100 by the pair of pressure members 1200.

First, the battery module 100 according to the present embodiment and the battery cells 110 included therein will be described in detail.

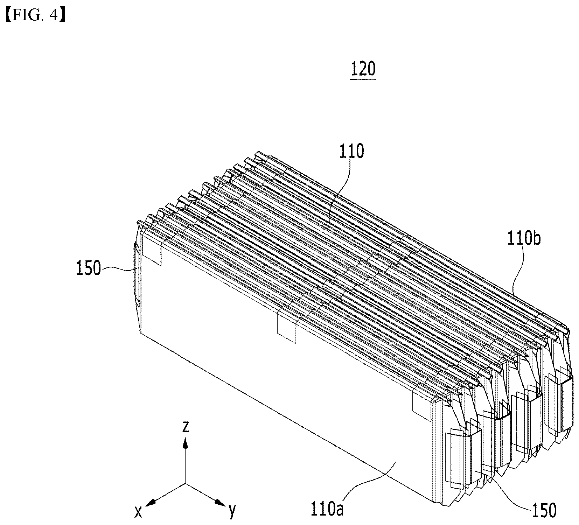

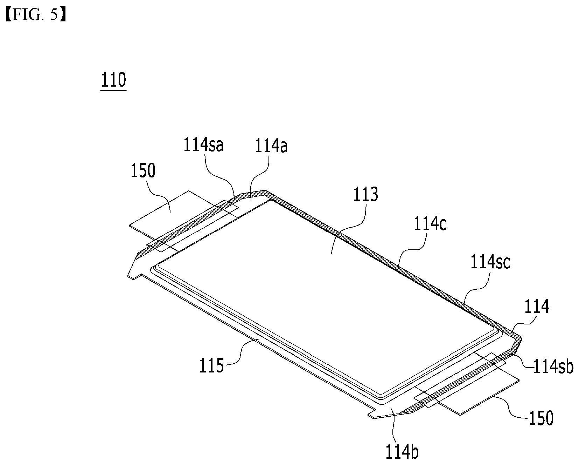

FIG. 4 is a perspective view showing a battery cell stack according to one embodiment of the present disclosure. FIG. 5 is a perspective view showing one of the battery cells included in the battery cell stack of FIG. 4. Specifically, although both the support frame 200 and the end plate 300 described below including the battery cell stack 120 are shown in FIG. 3, but FIG. 4 shows only the battery cell stack 120 for convenience of explanation.

Referring to FIGS. 2 to 5 together, the battery module 100 according to the present embodiment may include a plurality of battery cells 110.

The battery cell 110 may be a pouch-type battery cell. For example, the battery cell 110 according to the present embodiment has a structure in which two electrode leads 150 face each other and protrude from one end 114a and the other end 114b of the cell main body 113, respectively. More specifically, the electrode leads 150 are connected to an electrode assembly (not shown), and are protruded from the electrode assembly (not shown) to the outside of the battery cell 110.

Meanwhile, the battery cell 110 can be produced by joining both ends 114a and 114b of a cell case 114 and one side part 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as heat sealing, and the remaining other side part may be composed of a folding part 115. In addition, the folding part 115 may extend along one edge of the battery cell 110.

FIG. 5 shows a battery cell 110 having bidirectional leads in which two electrode leads 150 protrude in mutually opposite directions, but other embodiments of the present disclosure also allow for a battery cell having a unidirectional lead in which two electrode leads protrude in the same direction.

Such battery cells 110 may be a kind of sheet form, and the battery cells 110 may be stacked along one direction to form a battery cell stack 120. FIG. 4 shows a state in which a plurality of battery cells 110 are stacked along a direction parallel to the x-axis. Thereby, the electrode leads 150 may protrude in the y-axis direction and the -y-axis direction.

The battery module 100 according to the present embodiment may include support frames 200 facing a pair of pressure members 1200. Specifically, the support frames 200 may be arranged so as to be adjacent to each of the battery cells 110a and 110b arranged on the outermost side of the battery cell stack 120. Depending on the stacking direction of the battery cells 110, the support frames 200 can be formed on both side surfaces of the battery module 100 as shown.

Meanwhile, the battery module 100 may further include end plates 300 located between the support frames 200 and covering one surface and the other surface of the battery cell stack 120. One surface and the other surface of the battery cell stack 120 may be surfaces of the battery cell stack 120 from which the electrode leads 150 protrude. Although not specifically shown, a busbar frame and an insulating cover may be located between the end plate 300 and the battery cell stack 120. The busbar frame is configured such that a busbar is mounted for connecting the electrode leads 150 of each battery cell 110 to each other, and the insulating cover is configured such that it includes an electrically insulating material and thus cuts off electrical connection between the battery cells 110 and the end plate 300.

Next, the support frame 200 according to the present embodiment will be described in detail.

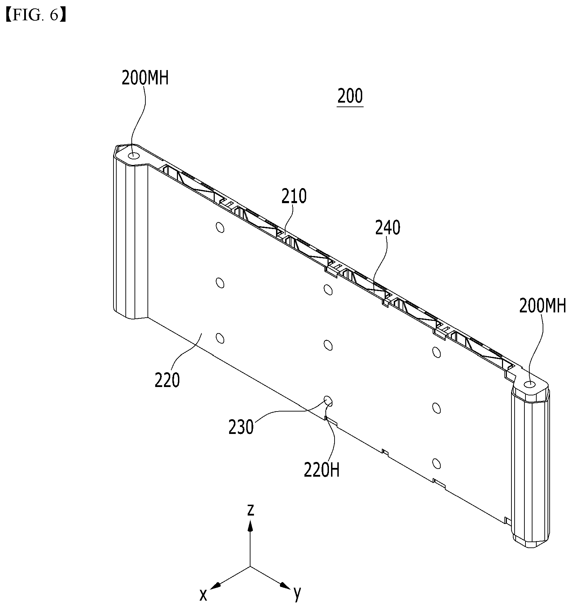

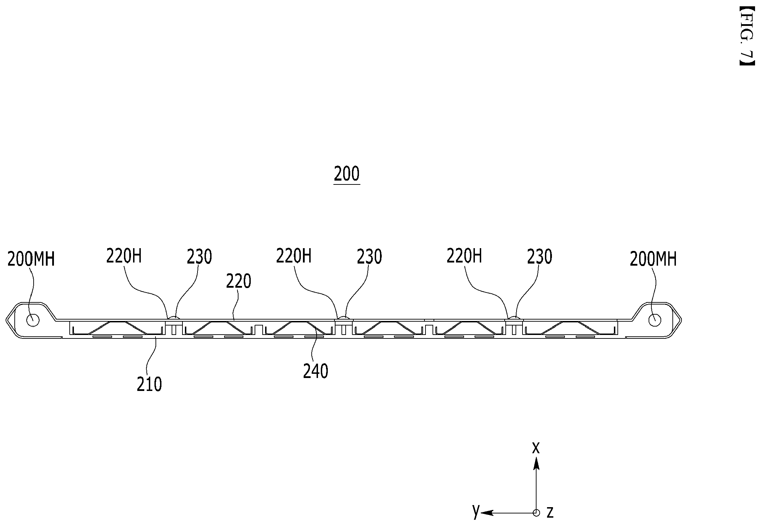

FIG. 6 is a perspective view showing a support frame according to one embodiment of the present disclosure. FIG. 7 is a plan view of the support frame of FIG. 6 as viewed from above.

Referring to FIGS. 6 and 7, at least one bearing ball 230 may be inserted into the support frame 200 according to the present embodiment. The at least one bearing ball 230 may rotate within the support frame 200.

Specifically, the support frame 200 may include a first frame 210, a second frame 220 and a bearing ball 230 located between the first frame 210 and the second frame 220.

The first frame 210 and the second frame 220 may be plate-shaped members. Among them, the first frame 210 may face the battery cells 110a and 110b arranged on the outermost side of the battery cell stack 120, and the second frame 220 may face the pressure member 1200 (see FIG. 2). One surface of the first frame 210 and one surface of the second frame 220 are spaced apart from each other to have a predetermined distance, and the bearing ball 230 may be located therebetween.

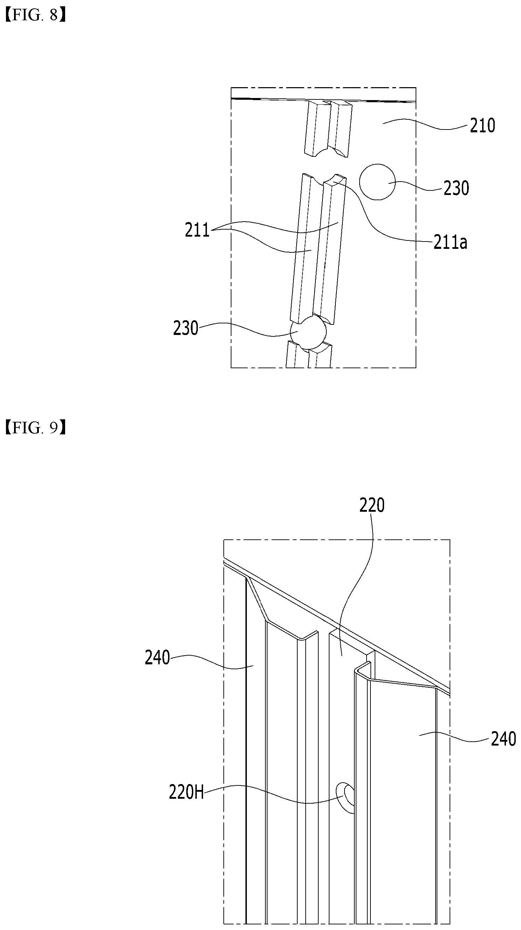

FIG. 8 is a partial view showing a first frame and a bearing ball according to one embodiment of the present disclosure. FIG. 9 is a partial view showing a second frame according to one embodiment of the present disclosure.

First, referring to FIG. 8, a plurality of ribs 211 may be formed on the first frame 210 according to the present embodiment. Such ribs 211 may be integrally formed with the first frame 210 by extrusion molding. Such ribs 211 may be provided with a housing part 211a capable of housing the bearing balls 230. The bearing ball 230 according to the present embodiment may be located without being rotatably fixed in the space within the housing part 211a provided on the rib 211.

Next, referring to FIG. 9, a through hole 220H may be formed in the second frame 220 according to the present embodiment. When the first frame 210 and the second frame 220 are coupled, the through hole 220H may be located to correspond to the bearing ball 230.

That is, the through hole 220H of the second frame 220 may be provided at a position corresponding to the housing 211a of the first frame 210. When the first frame 210 and the second frame 220 are coupled, the bearing ball 230 may be arranged in a space between the housing part 211a and the through hole 220H.

The diameter of the through hole 220H is smaller than the diameter of the bearing ball 230, so the bearing ball 230 does not escape to the outside. However, a part of the bearing ball 230 may protrude outward from one surface of the support frame 200, particularly the second frame 220, through the through hole 220H.

Taken together, at least one bearing ball 230 according to the present embodiment is arranged to be rotatable within the support frame 200, but a part of the at least one bearing ball 230 may be exposed and protrude from one surface of the support frame 200 in a direction in which the pressure member 1200 (see FIG. 2) is located. The second frame 220 is a surface facing the pressure member 1200 (see FIG. 2), and a protruding portion of the bearing ball 230 may make contact with the pressure member 1200.

Meanwhile, the support frame 200 may further include a spring part 240 located between the first frame 210 and the second frame 220. The spring part 240 may be in the form of a leaf spring. When swelling of the battery cells 110 occurs, the spring part 240 inside the support frame 200 is compressed to partially absorb the swelling of the battery cells 110.

Meanwhile, the coupling method of the first frame 210 and the second frame 220 are not particularly limited, but a physical coupling method can be applied. In one example, as shown in FIG. 7, this is a kind of crimping coupling method in which both ends of the second frame 220 are bent while wrapping both ends of the first frame 210, and the first frame 210 and the second frame 220 may be physically coupled.

Next, the pressure member according to the present embodiment will be described in detail.

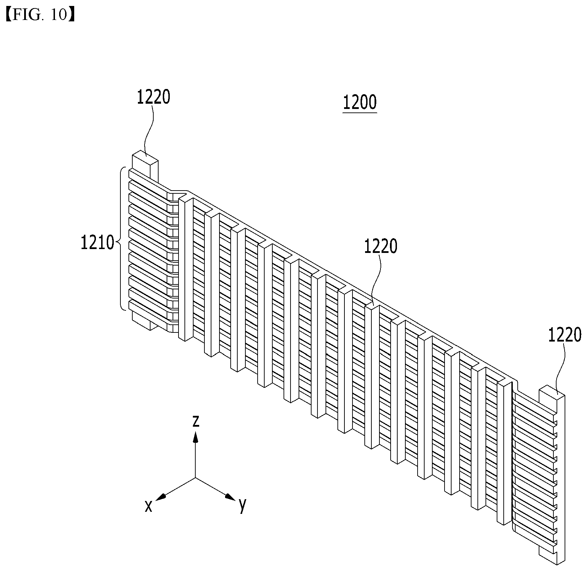

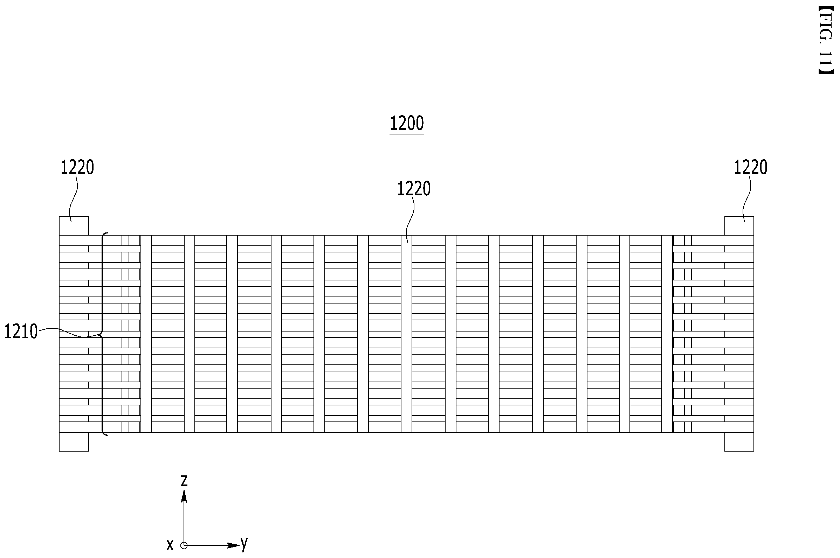

FIGS. 10 and 11 are a perspective view and a side view of a pressure member according to one embodiment of the present disclosure, respectively.

Referring to FIGS. 2, 10 and 11, as mentioned above, a pair of pressure members 1200 according to the present embodiment are arranged in the pack case 1100, and the battery module 100 is located between the pair of pressure members 1200.

The pressure member 1200 according to the present embodiment may be an elastic body that applies a pressing force toward the battery module 100. In one example, the pressure member 1200 may have a spring structure that applies a pressing force in a direction in which the battery module 100 is located. Thereby, when the battery module 100 is forcibly inserted between the pair of pressure members 1200, a pressing force can be applied to both side surfaces of the battery module 100.

More specifically, the pressure member 1200 may have a leaf spring structure that protrudes in a direction where the battery module 100 is located. Further, the interval between the pair of pressure members 1200 is slightly narrower than the width of the battery module 100. Here, the width of the battery module 100 may mean the length of the battery module 100 along the stacking direction (direction parallel to the x-axis) of the battery cells 110.

A pair of pressure members 1200 are provided in the pack case 1100 with the above structure, and the battery module 100 is forcibly inserted therebetween, and a pressing force is applied to the battery module 100 by a pair of pressure members 1200. Here, "forcibly inserted" means that the battery module 100 is forcibly inserted between a pair of pressure members 1200 having an interval slightly narrower than the width of the battery module 100. That is, the interval between the pair of pressure members 1200 is narrower than the width of the battery module 100, so that the battery module 100 can be forcibly inserted between the pair of pressure members 1200. Thereby, pressing force is naturally applied to the battery module 100 by the pair of pressure members 1200. In other words, the battery module 100 may be sandwiched between the pair of pressure members 1200 in an elastic assembly form. The elastic assembly refers to a shape in which while the battery module 100 is sandwiched between the pair of pressure members 1200, the pair of pressure members 1200 behave elastically by the battery module 100, and the battery module 100 is fixed and subjected to pressing force by the elastic force of the pair of pressure members 1200.

More specifically, this may be a shape in which the central part of the pressure member 1200 protrudes so as to be bent toward the place where the battery module 100 is located, than both ends of the pressure member 1200 along the direction parallel to the direction (y-axis direction or -y-axis direction) in which the electrode lead 150 of the battery cell 110 protrudes. Thereby, the pressure member 1200 may apply a certain level of pressing force to both side surfaces of the battery module 100.

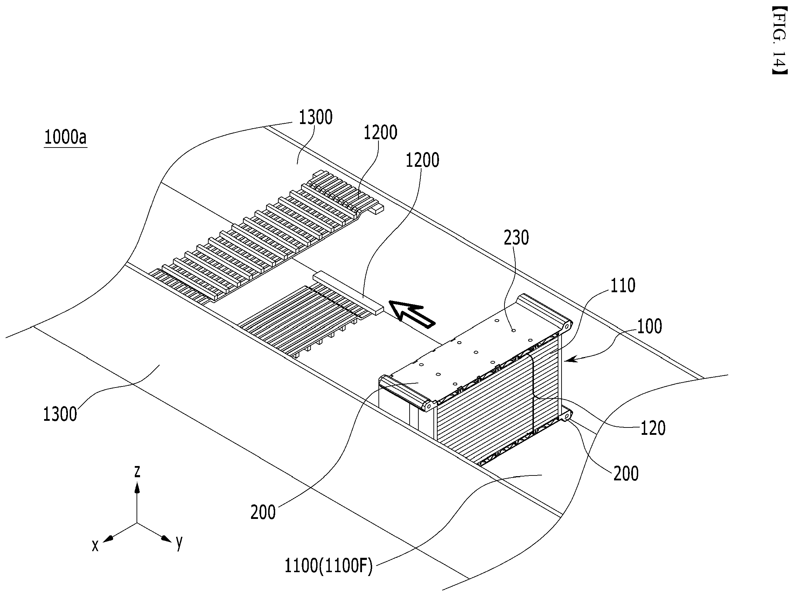

In particular, as described above, the battery cells 110 are stacked along one direction within the battery module 100. As shown in FIGS. 2 and 4, a plurality of battery cells 110 may be stacked along a direction parallel to the x-axis to form a battery cell stack 120. In this embodiment, the one direction in which the battery cells 110 are stacked may be parallel to one surface of the bottom portion 1100F of the pack case 1100. The battery cells 110 can be stacked in a state in which one surface of the battery cells 110, specifically, one surface of the battery body 113 (see FIG. 5) of the battery cells 110, is perpendicular to one surface of the bottom part1100F of the pack case 1100. In other embodiment of the present disclosure, the shape in which the battery cells 110 are stacked may vary, and this will be explained again in FIG. 14.

At this time, the pair of pressure members 1200 are respectively located on both surfaces of the battery module 100 in a direction in which the battery cells 110 are stacked. The pair of pressure members 1200 press both surfaces of the battery module 100 in a direction in which the battery cells 110 are stacked. That is, the pair of pressure members 1200 apply a pressing force in a direction capable of controlling swelling of the battery cells 110.

Further, the pressure member 1200 according to the present embodiment may have a shape in which a plurality of spring members 1210 are arranged at intervals along the height direction as shown in FIGS. 10 and 11. Each spring member 1210 having a central part curved to the place where the battery module 100 is located may be arranged at regular intervals along the height direction. Here, the height direction refers to a direction perpendicular to one surface of the bottom part 1100F of the pack case 1100 and a direction parallel to the z-axis direction.

Further, the pressure member 1200 may further include a connection part 1220 that connects the spring members 1210 so that the spring members 1210 can be maintained at a regular interval. The number and position of the connection parts 1220 are not particularly, but they may be located at both ends of the pressure member 1200, respectively. In addition, other connection parts 1220 may be further provided at regular intervals between the connection parts 1220 located at both ends.

As described above, the pressure member 1200 is not configured in the form of a single leaf spring, but is configured to include individual spring members 1210 whose parts are separated from each other, it is made to correspond individually cope with the swelling characteristics of the battery cells 110 according to their positions. That is, the present embodiment in which the individual spring members 1210 are separated has the advantage of exhibiting flexible elastic behavior against swelling of the battery cell 110 as compared to a completely integrated structure.

Next, the material of the pressure member 1200 according to the present embodiment will be described in detail. The pressure member 1200 according to this embodiment may include a composite material, wherein the composite material may be Fiber Reinforced Plastic (FRP) or Carbon Fiber Reinforced Plastic (CFRP). The fiber-reinforced plastic or carbon fiber-reinforced plastic is plastic-based composite materials reinforced with glass fiber and carbon fiber, respectively, which are materials with excellent mechanical properties and corrosion resistance.

When a metal material is applied to the pressure member 1200, there is a problem that the amount of displacement capable of absorbing the swelling of the battery cell 110 is small due to the low tensile modulus. Even if the battery cell stack 120 is slightly displaced due to the swelling of the battery cell 110, a large stress is generated in the bent portion of the leaf spring shape. In the case of battery cells with high degree of swelling, such as pure Si cells, solid-state batteries, and high-SiO-content cells, the degree of swelling is large, and thus, the amount of displacement that should be absorbed by the battery module is also large. Therefore, a frame using a metal material in a battery module to which such battery cells are applied has a limit in absorbing swelling.

On the other hand, in the case of fiber-reinforced plastics or carbon fiber-reinforced plastics, since they have a lower Young's modulus than metal while having a tensile strength equal to or greater than that of metal, they can exhibit elastic behavior capable of effectively absorbing swelling while having high stiffness against swelling of battery cells. In the case of a pure Si cell or a solid-state battery, a maximum pressure of 3~8 MPa is generated at EOL (End Of Life), but a composite material of fiber-reinforced plastic or carbon fiber-reinforced plastic can exhibit elastic behavior even at such a high pressure, and thus is suitable for application to the pressure member 1200 according to the present embodiment.

Further, since fiber-reinforced plastics or carbon fiber-reinforced plastics are produced by laminating glass fibers or carbon fibers and then curing a resin around them, they have the advantage of being able to set strengths and elastic moduli that are different for each direction.

However, composite materials of existing fiber-reinforced plastics or carbon fiber-reinforced plastics have been developed with a focus on lightweight and high-strength characteristics, and have the problem of being brittle and relatively expensive. Therefore, the composite material according to the present embodiment attempts to solve the above problems by changing the material of the resin and including a sheet material in addition to the fiber material.

Meanwhile, referring to FIGS. 2, 3, 6 and 10, the support frame 200 according to the present embodiment may have a recessed shape corresponding to the protruding shape of the pressure member 1200. Specifically, one surface of the support frame 200 facing the pressure member 1200 has a recessed shape, and the other surface facing the battery cells 120 has a flat shape. More specifically, the second frame 220 of the support frame 200 faces the pressure member 1200, wherein one surface of the second frame 220 may have a recessed shape corresponding to the protruding shape of the pressure member 1200. Meanwhile, the first frame 210 of the support frame 200 faces the battery cell stack 120, wherein the first frame 210 may have a flat shape.

Thereby, when the battery module 100 is forcibly inserted between the pair of pressure members 1200, the pressure members 1200 can apply a predetermined pressing force while being in close contact with both side surfaces of the battery module 100.

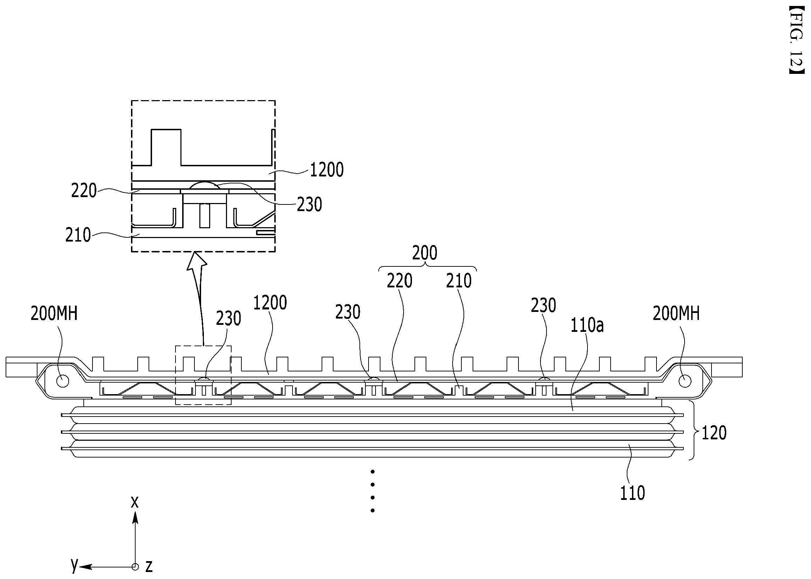

Next, the forcibly inserted shape of the battery module according to the present embodiment will be described in detail with reference to FIG. 12 and the like.

FIG. 12 is a plan view showing a state in which a battery cell stack, a support frame, and a pressure member are arranged according to one embodiment of the present disclosure. Specifically, it is a plan view of a portion of the battery pack of FIG. 2 where the support frame 200 of the battery module 100 and the pressure member 1200 abut on each other, as seen along the -z-axis direction on the xy plane.

Referring to FIGS. 2, 7 and 12 together, when the battery module 100 is inserted between the pair of pressure members 1200, the battery module 100 is forcibly inserted between the pair of pressure members 1200 according to the rotation of at least one bearing ball 230. That is, at least one bearing ball 230 can facilitate the process of forcibly inserting the battery module 100 between the pair of pressure members 1200.

It may be necessary to apply a certain level of pressure of the battery module 100 to exhibit battery performance. In one example, the battery cell 110 according to the present embodiment may be a solid-state battery. In the case of the solid-state battery, a high pressure of at least 1~5 MPa must be applied to exhibit battery performance. A conventional battery module 10 as shown in FIG. 1 has structural difficulties in applying such a high level of pressure.

In order to apply such a high level of pressure, it is necessary to provide a pressure member 1200 having a predetermined elastic force and forcibly insert the battery module 100 therebetween. Thereby, in the present embodiment, the interval of the pressure members 1200 having a leaf spring structure protruding in a direction facing each other is adjusted, and the battery module 100 is forcibly inserted therebetween, so that the battery module 100 is inserted, and at the same time, high pressure can be naturally applied to the battery module 100.

In order to apply pressure to the battery cells 110, as described above, the pair of pressure members 1200 are preferably located on both side surfaces of the battery module 100 in the direction in which the battery cells 110 are stacked. That is, the pair of pressure members 1200 may press both side surfaces of the battery module 100 in a direction in which the battery cells 110 are stacked.

In addition, in order to improve the assembly property of the forcibly inserting method as described above, in this embodiment, the bearing ball 230 was provided on the support frame 200 located on the side of the battery module 100.

As described above, the bearing ball 230 may be partially exposed and protruded in a direction in which the pressure member 1200 is located so as to make contact with the pressure member 1200. Because the bearing ball 230 rotates in the process of inserting the battery module 100, the forcibly inserting method of the battery module 100 may be more easily possible. In some cases, hydraulic pressure may be applied to the battery module 100 to smoothly insert the battery module 100. The number and position of the bearing balls 230 formed on the support frame 200 are not particularly limited as long as they are for improving the assembly property of the forcibly inserting method.

The battery pack 1000 according to the present embodiment is intended to realize a high pressure level of 1~5 MPa through the forcibly inserting method of the battery module 100 as described above.

Meanwhile, even if the battery cell 110 has a high level of swelling or 10~20% breathing, it can be effectively absorbed through the pressure member 1200 located on the side surface of the battery module 100. Although not specifically shown, a compression pad may be further arranged inside the battery module 100 to absorb swelling or breathing.

Referring to FIGS. 2 and 3 again, a pair of pressure members 1200 are disposed to stand vertically on one surface of the bottom part 1100F of the pack case 1100. The battery pack 1000 according to this embodiment may further include at least two vertical beams 1300 disposed in the pack case 1100. At least two vertical beams 1300 may be disposed to be perpendicular to one surface of the bottom part 1100F of the pack case 1100, and a pair of pressure members 1200 and a battery module 100 may be located between at least two vertical beams 1300 adjacent to each other. The pressure members 1200 may be coupled and fixed to the pack case 1100. The method of coupling the pressure members 1200 to the pack case 1100 is not particularly limited, but a mechanical fastening method, an adhesive member or the like can be applied. In one example, both ends of the pressure member 1200 can be fixed to a pair of vertical beams 1300, respectively.

Meanwhile, a mounting hole 200MH may be formed in the support frame 200. The mounting hole 200MH is in the form of penetrating along the height direction described above, and the battery module 100 can be attached and fixed to the pack case 1100 using this. In one example, the battery module 100 can be mounted and fixed to the pack case 1100 in such a manner that a bolt passes through the mounting hole 200MH and is coupled to the bottom part 1100F of the pack case 1100.

As shown in FIG. 3, the battery module 100 according to the present embodiment may include a module frame that houses the battery cells 110, and a support frame 200 may constitute both side surfaces of the module frame. That is, a separate frame is not provided, but the support frame 200 itself may be both side surface parts of the module frame that houses the battery cells 110. In FIG. 3, the upper and lower parts of the battery cell stack 120 are shown in an opened form, but optionally, a cover member covering the upper and lower parts may be further provided to configure the module frame.

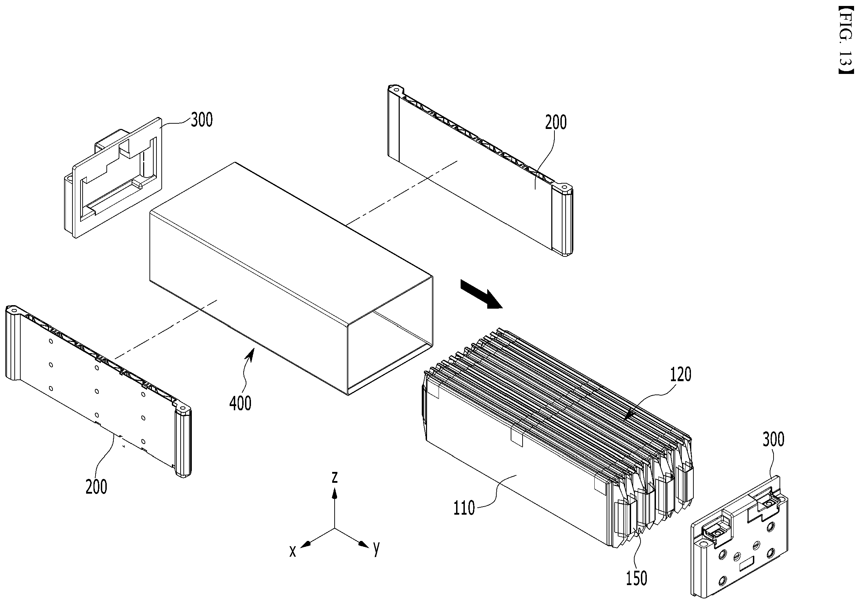

FIG. 13 is an exploded perspective view showing a battery module according to another embodiment of the present disclosure.

Referring to FIG. 13, a battery module according to another embodiment of the present disclosure may include a battery cell stack 120 in which battery cells 110 are stacked, a module frame 400 that houses the battery cell stack 120 and a support frames 200 in the form of being attached to both side surfaces of the module frame 400, respectively. The module frame 400 can have a form in which one side and the other side are opened, and end plates 300 can be located on the opened one side and other side of such a module frame 400. The support frame 200 has the same configuration as described above, but unlike the battery module of FIG. 3, it is in the form of being attached to the module frame 400. That is, The battery module 100 may be manufactured in such a manner that a separate module frame 400 that houses the battery cell stack 120 is provided, and the support frames 200 are attached to both side surfaces of the module frame 400, respectively.

FIG. 14 is a perspective view showing a battery pack according to another embodiment of the present disclosure in which the stacking direction of battery cells is changed.

Referring to FIG. 14, a battery pack 1000a according to another embodiment of the present disclosure includes a battery module 100 including a plurality of battery cells 110, a pack case 1100 that houses the battery module 100 and a pair of pressure members 1200 arranged in the pack case 1100, wherein the battery module 100 is located between the pair of pressure members 1200. The battery module 100 is forcibly inserted between the pair of pressure members 1200, and configured such that a pressing force is applied to the battery module 100 by the pair of pressure members 1200.

The battery cells 110 may be stacked along one direction, wherein the one direction in which the battery cells 110 are stacked may be perpendicular to one surface of the bottom part 1100F of the pack case 1100. The battery cells 110 can be stacked in a state in which one surface of the battery cells 110, specifically, one surface of the battery body 113 (see FIG. 5) of the battery cells 110, is parallel to one surface of the bottom part 1100F of the pack case 1100.

Thereby, the pair of pressure members 1200 may be arranged side by side with one surface of the bottom part 1100F of the pack case 1100. Further, the pair of pressure members 1200 may be located apart from each other along the height direction on the bottom part 1100F of the pack case 1100. Additionally, the pair of pressure members 1200 may be located between at least two vertical beams 1300 arranged on the pack case 1100.

Meanwhile, the battery module 100 may include support frames 200 facing a pair of pressure members 1200, and the support frames 200 may be formed on each of the upper and lower surfaces of the battery module 100 depending on the stacking direction of the battery cells 110, as shown. At least one bearing ball 230 described above may be inserted into this support frame 200, and a part of the bearing ball 230 may be exposed and protruded from one surface of the support frame 200 toward the pressure member 1200.

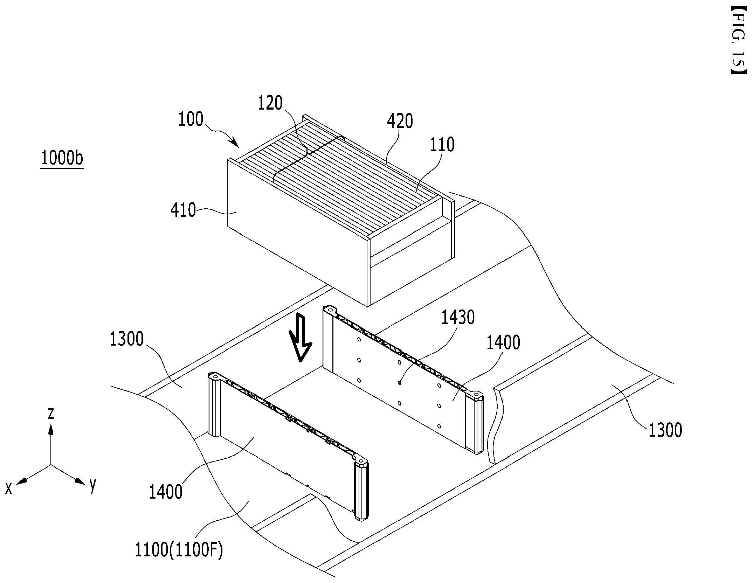

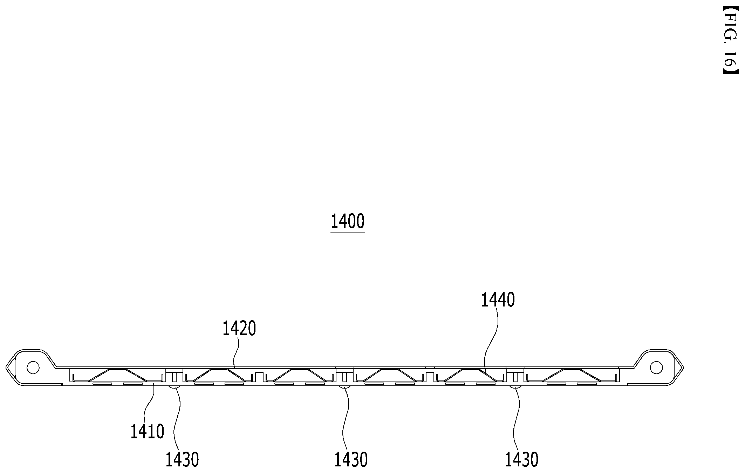

Next, a battery pack according to a modified embodiment of the present disclosure will be described in detail with reference to FIGS. 15 and 16.

FIG. 15 is a perspective view showing a battery pack according to a modified embodiment of the present disclosure. FIG. 16 is a plan view of a pressure member included in the battery pack of FIG. 15 as viewed from above.

Referring to FIGS. 15 and 16, the battery pack 1000b according to a modified embodiment of the present disclosure includes a battery module 100 including a plurality of battery cells 110, a pack case 1100 that houses the battery module 100, and a pair of pressure members 1400 arranged in the pack case 1100, wherein the battery module 100 is located between the pair of pressure members 1400. The battery module 100 is forcibly inserted between the pair of pressure members 1400, and configured such that a pressing force is applied to the battery module 100 by a pair of pressure members 1400.

The pair of pressure members 1400 may be an elastic body that applies a pressing force toward the battery module 100, at least one bearing ball 1430 may be inserted into the pair of pressure members 1400, and at least one bearing ball 1430 may rotate within the pressure member 1400. Further, the pair of pressure members 1400 may be fixed to the pack case 1100 between a pair of vertical beams 1300 adjacent to each other. That is, unlike the battery pack 1000 described above, in the case of the battery pack 1000b according to the present embodiment, at least one bearing ball 1430 may be provided inside the pair of pressure members 1400 fixed to the pack case 1100.

Specifically, the pressure member 1400 may include a first pressing frame 1410, a second pressing frame 1420, and a bearing ball 1430 located between the first pressing frame 1410 and the second pressing frame 1420. The first pressing frame 1410 and the second pressing frame 1420 may be plate-shaped members. One side of the first pressing frame 1410 and one side of the second pressing frame 1420 are spaced apart from each other to have a certain distance, and a bearing ball 1430 may be located therebetween.

At least one bearing ball 1430 located inside the pressure member 1400 may be rotatably arranged within the pressure member 1400. A part of the at least one bearing ball 1430 may be exposed and protruded toward the battery module 100 from one surface of the pressure member 1400. The exposed portion of the bearing ball 1430 may make contact with the battery module 100. In one example, side plates 410 and 420 may be provided on both surfaces of the battery module 100 in a direction in which the battery cells 110 are stacked. The side plates 410 and 420 may be plate-shaped members, and the exposed portion of the bearing ball 1430 may make contact with the side plates 410 and 420 of the battery module 100 .

When the battery module 100 is forcibly inserted between the pair of pressure members 1400, the forcible insertion can be made more easily by rotating the at least one bearing ball 1430. Meanwhile, the pressure member 1400 may further include a spring part 1440 located between the first pressing frame 1410 and the second pressing frame 1420. The spring part 1440 may have a plate spring shape. When the battery module 100 is sandwiched between the pair of pressure members 1400, the spring part 1440 can be compressed to forcibly insert the battery module 100.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The battery pack according to the present embodiment described above may include, in addition to the battery module, various control and protection systems such as a BMS(battery management system), a BDU(battery disconnect unit), and a cooling system.

The battery pack can be applied to various devices. For example, it can be applied to vehicle means such as an electric bike, an electric vehicle, and a hybrid electric vehicle, or ESS (Energy Storage System), but is not limited thereto and can be applied to various devices capable of using a secondary battery.

Although the invention has been described in detail above with reference to preferred embodiments of the present disclosure, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery module
110: battery cell
200: support frame
1000: battery pack
1100: pack case
1200: pressure member

## Claims

1. A battery pack (1000, 1000a, 1000b) comprising:
a battery module (100) including a plurality of battery cells (110);
a pack case (1100) that houses the battery module (100); and
a pair of pressure members (1200, 1400) that are arranged in the pack case (1100),
wherein the battery cells (110) are stacked along one direction within the battery module (100),
wherein the battery module (100) is located between the pair of pressure members (1200, 1400),
wherein the pair of pressure members (1200, 1400) are respectively located on both side surfaces of the battery module (100) in a direction in which the battery cells (110) are stacked,
wherein the pair of pressure members (1200, 1400) are configured to press both side surfaces of the battery module in the direction in which the battery cells (110) are stacked,
wherein an interval between the pair of pressure members (1200, 1400) is narrower than a width of the battery module (100) such that the battery module (100) is forcibly inserted between the pair of pressure members (1200, 1400),
wherein the width of the battery module (100) corresponds to a length of the battery module along the direction in which the battery cells (110) are stacked, and
wherein the battery module (100) is configured such that a pressing force is applied to both side surfaces of the battery module (100) in a direction capable of controlling swelling of the battery cells by the pair of pressure members (1200, 1400).

2. The battery pack of claim 1, wherein:
the pressure member (1200, 1400) is an elastic body that applies a pressing force toward the battery module (100).

3. The battery pack of claim 1, wherein:
the pressure member (1200, 1400) has a leaf spring structure that protrudes in a direction in which the battery module (100) is located.

4. The battery pack of claim 1, wherein:
one direction in which the battery cells (110) are stacked is parallel to one surface of the bottom part (1100F) of the pack case (1100), or perpendicular to one surface of the bottom part (1100F) of the pack case (1100).

5. The battery pack of claim 1, wherein:
the battery module (100) includes support frames (200) facing the pair of pressure members (1200).

6. The battery pack of claim 5, wherein:
the support frame (200) has a recessed shape such that it corresponds to the protruding shape of the pressure member (1200).

7. The battery pack of claim 5, wherein:
one surface of the support frame (200) facing the pressure member (1200) has a recessed shape, and the other surface facing the battery cells (110) has a flat shape.

8. The battery pack of claim 5, wherein:
at least one bearing ball (230) is inserted into the support frame (200), and
the at least one bearing ball (230) rotates within the support frame (200).

9. The battery pack of claim 8, wherein:
a part of the at least one bearing ball (230) is exposed and protruded from one surface of the support frame (200) in a direction where the pressure member (1200) is located, and the at least one bearing ball (230) makes contact with the pressure member (1200).

10. The battery pack of claim 8, wherein:
the battery module (100) is forcibly inserted and coupled between the pair of pressure members (1200) according to the rotation of the at least one bearing ball (230).

11. The battery pack of claim 5, wherein:
the battery module (100) includes a module frame (400) that houses the battery cells (110), and
the support frames (200) constitute both side surfaces of the module frame (400), or are configured so as to be attached to both side surfaces of the module frame (400), respectively.

12. The battery pack of claim 1,
further comprising at least two vertical beams (1300) arranged in the pack case (1100), and
the pair of pressure members (1200, 1400) and the battery module (100) are located between a pair of vertical beams (1300) adjacent to each other among the at least two vertical beams (1300).

13. The battery pack of claim 1, wherein:
at least one bearing ball (1430) is inserted into the pressure member (1400),
at least one bearing ball (1430) rotates within the pressure member (1400), and
a part of the at least one bearing ball (1430) is exposed and protruded toward the battery module (100), and the at least one bearing ball (1430) makes contact with the battery module (100).

## Patentansprüche

1. Batteriepack (1000, 1000a, 1000b) aufweisend:
ein Batteriemodul (100) mit mehreren Batteriezellen (110);
ein Packgehäuse (1100), in dem das Batteriemodul (100) aufgenommen ist; und
ein Paar Druckelemente (1200, 1400), die in dem Packgehäuse (1100) angeordnet sind,
wobei die Batteriezellen (110) entlang einer Richtung innerhalb des Batteriemoduls (100) gestapelt sind,
wobei das Batteriemodul (100) zwischen dem Paar Druckelemente (1200, 1400) angeordnet ist,
wobei das Paar Druckelemente (1200, 1400) auf einer jeweiligen der beiden Seitenflächen des Batteriemoduls (100) in einer Richtung angeordnet ist, in der die Batteriezellen (110) gestapelt sind,
wobei das Paar Druckelemente (1200, 1400) so konfiguriert ist, dass es beide Seitenflächen des Batteriemoduls in der Richtung presst, in der die Batteriezellen (110) gestapelt sind,
wobei ein Abstand zwischen dem Paar Druckelemente (1200, 1400) kleiner ist als eine Breite des Batteriemoduls (100), so dass das Batteriemodul (100) zwangsweise zwischen das Paar Druckelemente (1200, 1400) eingeführt wird,
wobei die Breite des Batteriemoduls (100) einer Länge des Batteriemoduls entlang der Richtung entspricht, in der die Batteriezellen (110) gestapelt sind, und
wobei das Batteriemodul (100) so konfiguriert ist, dass eine Druckkraft auf beide Seitenflächen des Batteriemoduls (100) in einer Richtung ausgeübt wird, in der ein Anschwellen der Batteriezellen durch das Paar Druckelemente (1200, 1400) kontrolliert werden kann.

2. Batteriepack nach Anspruch 1, wobei:
das Druckelement (1200, 1400) ein elastischer Körper ist, der eine Druckkraft auf das Batteriemodul (100) ausübt.

3. Batteriepack nach Anspruch 1, wobei:
das Druckelement (1200, 1400) eine Blattfederstruktur aufweist, die in einer Richtung vorsteht, in der das Batteriemodul (100) angeordnet ist.

4. Batteriepack nach Anspruch 1, wobei:
eine Richtung, in der die Batteriezellen (110) gestapelt sind, parallel zu einer Fläche des unteren Teils (1100F) des Packgehäuses (1100) oder senkrecht zu einer Fläche des unteren Teils (1100F) des Packgehäuses (1100) ist.

5. Batteriepack nach Anspruch 1, wobei:
das Batteriemodul (100) Stützrahmen (200) aufweist, die dem Paar Druckelemente (1200) zugewandt sind.

6. Batteriepack nach Anspruch 5, wobei:
der Stützrahmen (200) eine vertiefte Form aufweist, so dass er der vorstehenden Form des Druckelements (1200) entspricht.

7. Batteriepack nach Anspruch 5, wobei:
eine Oberfläche des Stützrahmens (200), die dem Druckelement (1200) zugewandt ist, eine vertiefte Form aufweist, und die andere Oberfläche, die den Batteriezellen (110) zugewandt ist, eine flache Form aufweist.

8. Batteriepack nach Anspruch 5, wobei:
mindestens eine Lagerkugel (230) in den Stützrahmen (200) eingesetzt ist, und
die mindestens eine Lagerkugel (230) sich innerhalb des Stützrahmens (200) dreht.

9. Batteriepack nach Anspruch 8, wobei:
ein Teil der mindestens einen Lagerkugel (230) freiliegt und von einer Oberfläche des Stützrahmens (200) in einer Richtung vorsteht, in der das Druckelement (1200) angeordnet ist, und die mindestens eine Lagerkugel (230) mit dem Druckelement (1200) in Kontakt kommt.

10. Batteriepack nach Anspruch 8, wobei:
das Batteriemodul (100) entsprechend der Drehung der mindestens einen Lagerkugel (230) zwangsweise zwischen das Paar Druckelemente (1200) eingeführt und gekoppelt wird.

11. Batteriepack nach Anspruch 5, wobei:
das Batteriemodul (100) einen Modulrahmen (400) aufweist, in dem die Batteriezellen (110) untergebracht sind, und
die Stützrahmen (200) beide Seitenflächen des Modulrahmens (400) bilden oder so konfiguriert sind, an einer jeweiligen der beiden Seitenflächen des Modulrahmens (400) angebracht zu werden.

12. Batteriepack nach Anspruch 1,
ferner aufweisend mindestens zwei vertikale Träger (1300), die in dem Packgehäuse (1100) angeordnet sind, und
das Paar Druckelemente (1200, 1400) und das Batteriemodul (100) zwischen einem Paar vertikaler Träger (1300) angeordnet sind, die unter den mindestens zwei vertikalen Trägern (1300) einander benachbart sind.

13. Batteriepack nach Anspruch 1, wobei:
mindestens eine Lagerkugel (1430) in das Druckelement (1400) eingesetzt ist,
mindestens eine Lagerkugel (1430) sich innerhalb des Druckelements (1400) dreht, und
ein Teil der mindestens einen Lagerkugel (1430) freiliegt und in Richtung des Batteriemoduls (100) vorsteht, und die mindestens eine Lagerkugel (1430) mit dem Batteriemodul (100) in Kontakt kommt.

## Revendications

1. Bloc de batterie (1000, 1000a, 1000b) comportant :
un module de batterie (100) comprenant une pluralité d'éléments de batterie (110) ;
un boîtier de bloc (1100) qui reçoit le module de batterie (100) ; et
une paire d'éléments de pression (1200, 1400) qui sont agencés dans le boîtier de bloc (1100),
dans lequel les éléments de batterie (110) sont empilés le long d'une direction à l'intérieur du module de batterie (100),
dans lequel le module de batterie (100) est situé entre la paire d'éléments de pression (1200, 1400),
dans lequel les éléments de la paire d'éléments de pression (1200, 1400) sont situés respectivement sur les deux surfaces latérales du module de batterie (100) dans une direction dans laquelle les éléments de batterie (110) sont empilés,
dans lequel les éléments de la paire d'éléments de pression (1200, 1400) sont configurés pour comprimer les deux surfaces latérales du module de batterie dans la direction dans laquelle les éléments de batterie (110) sont empilés,
dans lequel un intervalle entre les éléments de la paire d'éléments de pression (1200, 1400) est plus étroit qu'une largeur du module de batterie (100) de telle sorte que le module de batterie (100) est inséré de force entre les éléments de la paire d'éléments de pression (1200, 1400),
dans lequel la largeur du module de batterie (100) correspond à une longueur du module de batterie le long de la direction dans laquelle les éléments de batterie (110) sont empilés, et
dans lequel le module de batterie (100) est configuré de telle sorte qu'une force de pression est appliquée au niveau des deux surfaces latérales du module de batterie (100) dans une direction en mesure de contrôler le gonflement des éléments de batterie par la paire d'éléments de pression (1200, 1400).

2. Bloc de batterie selon la revendication 1, dans lequel :
l'élément de pression (1200, 1400) est un corps élastique qui applique une force de pression vers le module de batterie (100).

3. Bloc de batterie selon la revendication 1, dans lequel :
l'élément de pression (1200, 1400) a une structure de ressort à lames qui fait saillie dans une direction dans laquelle le module de batterie (100) est situé.

4. Bloc de batterie selon la revendication 1, dans lequel :
une direction dans laquelle les éléments de batterie (110) sont empilés est parallèle à une surface de la partie inférieure (1100F) du boîtier de bloc (1100), ou perpendiculaire à une surface de la partie inférieure (1100F) du boîtier de bloc (1100).

5. Bloc de batterie selon la revendication 1, dans lequel :
le module de batterie (100) comprend des cadres de support (200) faisant face à la paire d'éléments de pression (1200).

6. Bloc de batterie selon la revendication 5, dans lequel :
le cadre de support (200) a une forme évidée telle qu'elle correspond à la forme faisant saillie de l'élément de pression (1200).

7. Bloc de batterie selon la revendication 5, dans lequel :
une surface du cadre de support (200) faisant face à l'élément de pression (1200) a une forme évidée, et l'autre surface faisant face aux éléments de batterie (110) a une forme plate.

8. Bloc de batterie selon la revendication 5, dans lequel :
au moins une bille de roulement (230) est insérée jusque dans le cadre de support (200), et
ladite au moins une bille de roulement (230) tourne à l'intérieur du cadre de support (200).

9. Bloc de batterie selon la revendication 8, dans lequel :
une partie de ladite au moins une bille de roulement (230) est exposée et fait saillie depuis une surface du cadre de support (200) dans une direction dans laquelle l'élément de pression (1200) est situé, et ladite au moins une bille de roulement (230) entre en contact avec l'élément de pression (1200).

10. Bloc de batterie selon la revendication 8, dans lequel :
le module de batterie (100) est inséré de force et accouplé entre les éléments de la paire d'éléments de pression (1200) en fonction de la rotation de ladite au moins une bille de roulement (230).

11. Bloc de batterie selon la revendication 5, dans lequel :
le module de batterie (100) comprend un cadre de module (400) qui reçoit les éléments de batterie (110), et
les cadres de support (200) constituent les deux surfaces latérales du cadre de module (400), ou sont configurés de manière à être fixés au niveau des deux surfaces latérales du cadre de module (400), respectivement.

12. Bloc de batterie selon la revendication 1,
comportant par ailleurs au moins deux poutres verticales (1300) agencées dans le boîtier de bloc (1100), et
la paire d'éléments de pression (1200, 1400) et le module de batterie (100) sont situés entre les poutres d'une paire de poutres verticales (1300) adjacentes l'une par rapport à l'autre parmi lesdites au moins deux poutres verticales (1300).

13. Bloc de batterie selon la revendication 1, dans lequel :
au moins une bille de roulement (1430) est insérée jusque dans l'élément de pression (1400),
au moins une bille de roulement (1430) tourne à l'intérieur de l'élément de pression (1400), et
une partie de ladite au moins une bille de roulement (1430) est exposée et fait saillie vers le module de batterie (100), et ladite au moins une bille de roulement (1430) entre en contact avec le module de batterie (100).
